# EUROPEAN PATENT APPLICATION

(11) **EP 4 745 057 A1**
(43) Date of publication of application: **20.05.2026**
(21) Application number: 25824586.9
(22) Date of filing: 10.04.2025
(51) Int. Cl.: B65G 1/04, B65G 1/137

(54) **CONVEYOR LINE LIMIT STOP DEVICE AND HANDLING METHOD FOR GOODS PALLET STORAGE AND RETRIEVAL**

(30) Priority: 19.12.2024 CN 202411880720
(71) Applicant: SHANGHAI ZS ROBOTICS CO., LTD, Shanghai 201111 (CN)
(72) Inventor: CUI, Lei, Shanghai 201111 (CN); WU, Yongqing, Shanghai 201111 (CN)
(74) Representative: Cleanthous, Marinos
(86) International application number: PCT/CN2025/088278
(87) International publication number: WO 2026/001195

(57) **Abstract**

A conveyor line limit stopping device and a handling method for goods pallet inbound and outbound are provided. The device includes a high-bay racking (1), a conveying mechanism (2), a shuttle (3), and interlaced travel tracks (4). The high-bay racking (1) and the conveying mechanism (2) are located above the travel tracks (4). The shuttle (3) moves and travels on the travel tracks (4) and shuttles below the high-bay racking (1) and the conveying mechanism (2). A limit stopping device (5) is arranged at one end of the conveying mechanism (2) close to the high-bay racking (5). When a pallet (9) that carries goods is placed on a conveying surface (17), if the conveying mechanism (2) performs forward conveying for inbound, the limit stopping device (5) is in limit contact with the pallet (9) that carries goods; and if a conveyor belt (8) performs backward conveying for outbound, the pallet (9) presses the limit stopping device (5) down to be below the conveying surface (17). Pallets (9) that carry goods with different weights or pallets (9) made of different materials can be accurately stopped at the same position at each time; a risk of goods falling during handling of the shuttle (3) is greatly lowered; and furthermore, the conveyor line limit stopping device can be applied to most scenarios for docking of the goods in the pallets (9) performed through conveyor lines.

## Description

### TECHNICAL FIELD

The present disclosure belongs to the field of intelligent automated storage and retrieval, and more particularly relates to a conveyor line limit stopping device and a handling method for goods pallet inbound and outbound.

### BACKGROUND

In an intelligent automated storage and retrieval system composed of a conveyor line and a high-bay warehouse, inbound and outbound processes of goods are generally achieved by the conveyor line. The existing conveyor line is controlled to be stopped through a signal from a photoelectric sensor. However, inconsistencies in weights or materials of goods in pallets will lead to deviations in stop positions of pallets on the conveyor line. As a result, when a shuttle enters the conveyor line to retrieve goods, a lifting plate of the shuttle cannot be directly aligned with a bottom of the goods in the pallets. This increases a risk of goods falling during handling.

### SUMMARY

The inventive purpose is as follows: To overcome the shortcomings in the existing technology, the present disclosure provides a conveyor line limit stopping device and a handling method for goods pallet inbound and outbound. Pallets that carry goods with different weights or pallets made of different materials can be accurately stopped at the same position at each time. This can greatly lower a risk of goods falling during handling of a shuttle. Furthermore, the conveyor line limit stopping device can be applied to most scenarios for docking of goods in pallets performed through conveyor lines and has a wide range of applications.

A technical solution is as follows: To achieve the above objectives, the present disclosure provides a conveyor line limit stopping device and a handling method for goods pallet inbound and outbound. The device includes a high-bay racking, a conveying mechanism, a shuttle, and interlaced travel tracks. The high-bay racking and the conveying mechanism are located above the travel tracks. The shuttle moves and travels on the travel tracks and shuttles below the high-bay racking and the conveying mechanism. A limit stopping device is arranged at one end of the conveying mechanism close to the high-bay racking. When a pallet is placed on a conveying surface, if the conveying mechanism performs forward conveying for inbound, the limit stopping device is in limit contact with a pallet that carries goods, and if a conveyor belt performs backward conveying for outbound, a pallet presses the limit stopping device down to be below the conveying surface.

Further, the conveying mechanism includes two groups of conveyor frames that are erected on two sides of the travel tracks in parallel; the two groups of conveyor frames are provided in the length direction with conveyor belts capable of performing forward and backward conveying; the limit stopping device is arranged on an inner side of any group of conveyor frame; and an upper surface of the limit stopping device protrudes from a conveying surface of the conveyor belt.

Further, the limit stopping device includes a limit plate and a rotating pin; a rotating hole is formed in a middle portion of the limit plate; the rotating pin is fixed on a side surface of a conveyor frame through the rotating hole; and the limit plate is able to rotate around the rotating pin relative to the conveyor frame.

Further, a swing adjustment slot is formed in a lower portion of the limit plate; a swing limit pin is arranged in the swing adjustment slot; the swing limit pin is fixed on the side surface of the conveyor frame through the swing adjustment slot; and when the limit plate rotates around the rotating pin relative to the conveyor frame, the swing limit pin slides within the swing adjustment slot and limits a rotation angle of the limit plate.

Further, one side, close to the center of the conveyor frame, of an upper portion of the limit plate obliquely upwards extends to form the limit portion; one side of the limit portion close to the center of the conveyor frame is a vertical limit surface; one side of the limit portion away from the center of the conveyor frame is a transitional slope; and in an initial state, the vertical limit surface of the limit portion is higher than the conveying surface of the conveyor belt.

Further, a hollow hole is formed in the limit portion. When the limit stopping device limits the pallet, the hollow hole formed in the limit portion of the limit plate can buffer an impact force of the pallet exerted to the limit portion.

Further, a handling method for a shuttle inbound process for the conveyor line limit stopping device includes:
step S1: a lift lifts and transports the pallet that carries goods onto the conveying surfaces, away from the high-bay racking, of the conveyor belts of the conveying mechanism;
step S2: the conveying mechanism is turned on, and the conveyor belts perform forward conveying, to cause the pallet that carries goods on the conveying surfaces of the conveyor belts to move towards the high-bay racking;
step S3: under the driving of the conveyor belts on the pallet that carries goods, when one side surface of a support leg on one side, close to the high-bay racking of the pallet that carries goods is in contact the vertical limit surface, the limit plate rotates around the rotating pin in a direction in which the limit portion moves away from the center of the conveyor frame, until the swing limit pin is in pressing contact with an end of the swing adjustment slot away from the center of the conveyor frame; at the time, the vertical limit surface is in limit contact with the pallet;
step S4: in the state of step S3, the two photoelectric detection devices arranged at the two ends of the conveyor frames control the driving mechanisms arranged below the conveyor frames to stop, making the conveyor belts not perform conveying;
step S5: in the state of step S4, the shuttle is driven onto a travel track located below the two conveyor belts and is in limit contact with the limit plate, and at the time, a lifting plate of the shuttle directly faces a lower surface of the pallet that carries goods; and
step S6: in the state of S5, the lifting plate of the shuttle rises up and jacks up the pallet that carries goods, then transports the pallet that carries goods along the travel track, and places the pallet that carries goods into the high-bay racking, to complete the inbound process.

Further, a handling method for a shuttle outbound process for the conveyor line limit stopping device includes:
step S7: the shuttle transports the pallet that carries goods onto the conveying surfaces at ends, close to the high-bay racking, of the conveyor belts of the conveying mechanism;
step S8: the conveying mechanism is turned on, and the conveyor belts perform backward conveying, to cause the pallet that carries goods on the conveying surfaces of the conveyor belts to move away from the high-bay racking;
step S9: under the driving of the conveyor belts on the pallet that carries goods, when a contour of a lower end of the support leg on one side, away from the high-bay racking, of the pallet that carries goods is in contact the transitional slope on the limit plate, the contour of the lower end of the support leg at the lower end of the pallet that carries goods presses the limit portion of the limit stopping device along the transitional slope; in the process, the limit plate rotates around the rotating pin in the direction in which the limit portion moves towards the center of the conveyor frame, until the limit plate descends below the conveying surfaces under the action of the support leg of the pallet that carries goods; in the process, a contour of an upper end of the limit portion is always in contact with the contour of the lower end of the pallet that carries goods, and the limit plate does not hinder the pallet that carries goods from moving together with the two conveyor belts;
step S10: at the time, two sides, in the length direction of the conveyor frame, of the goods carried on the pallet block laser emitted by the laser emitting devices of the two photoelectric detection devices arranged at the two ends of the conveyor frames, so that the receiving devices of the two photoelectric detection devices do not receive the laser emitted by the laser emitting devices; at the time, the photoelectric detection devices control the driving mechanisms arranged below the conveyor frames to stop, making the conveyor belts not perform conveying; at the time, a bottom of the pallet that carries goods is located right above the lifting plate of the lift; and
step S11: afterwards, the lifting plate of the lift rises up and jacks up the pallet that carries goods, and lifts the pallet that carries goods to an outbound port, to complete the outbound process.

Beneficial effects: The present disclosure provides a conveyor line limit stopping device and a handling method for goods pallet inbound and outbound. By the arrangement of the limit stopping device on the conveying mechanism, pallets that carry goods with different weights or pallets made of different materials can be accurately stopped at the same position at each time, and the goods outbound process will not be affected, thus ensuring that when the shuttle enters a conveyor line to pick up goods, the goods in the pallets are located in a center position of the lifting plate of the shuttle. This can greatly lower risks of goods deviation caused by the fact that the goods in the pallets are not in the center position of the lifting plate of the shuttle, and goods falling caused by scratching of goods during handling of the shuttle. Furthermore, the conveyor line limit stopping device can be applied to most scenarios for docking of the goods in the pallets performed through conveyor lines and has a wide range of applications.

### BRIEF DESCRIPTION OF THE DRAWINGS

FIG. 1 is a schematic diagram of an application scenario of a conveyor line limit stopping device and a handling method for goods pallet inbound and outbound according to the present disclosure;
FIG. 2 is a schematic structural diagram of a conveyor line according to the present disclosure;

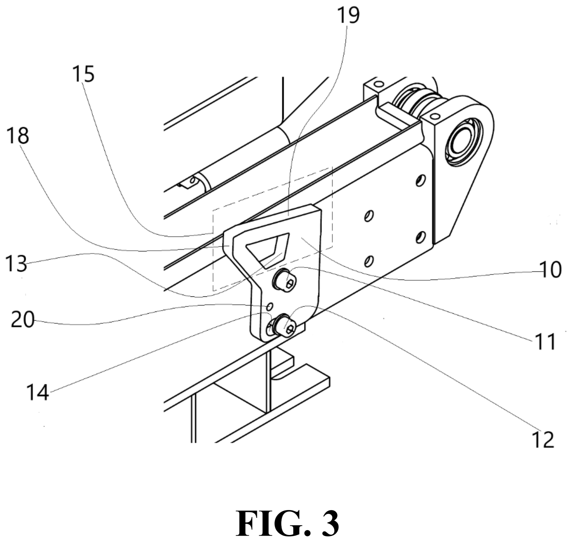

FIG. 3 is a schematic structural diagram of a limit stopping device according to the present disclosure;

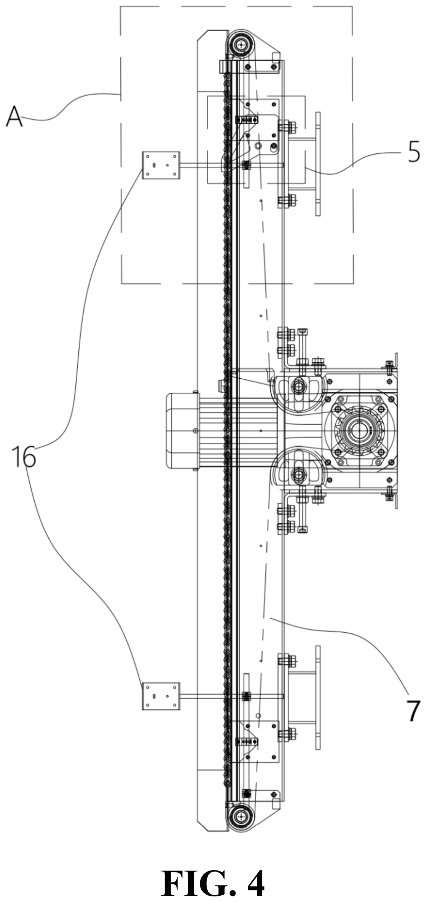

FIG. 4 is a schematic diagram of mounting of a limit stopping device and a conveyor frame of a conveyor line according to the present disclosure;

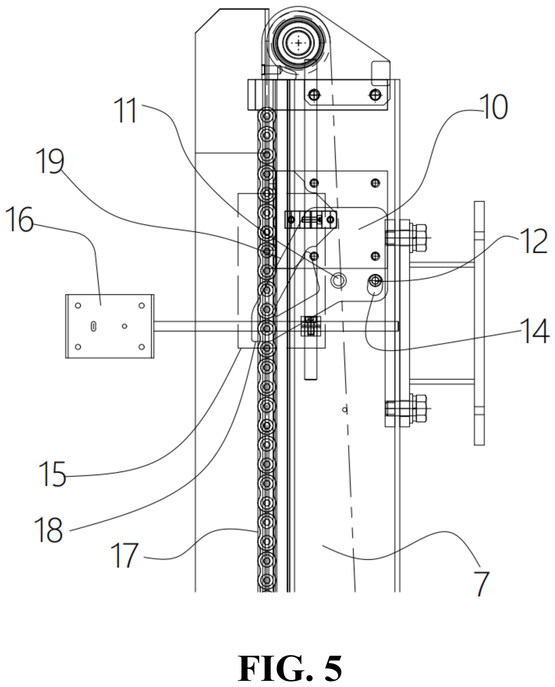

FIG. 5 is a partially enlarged diagram of part A;

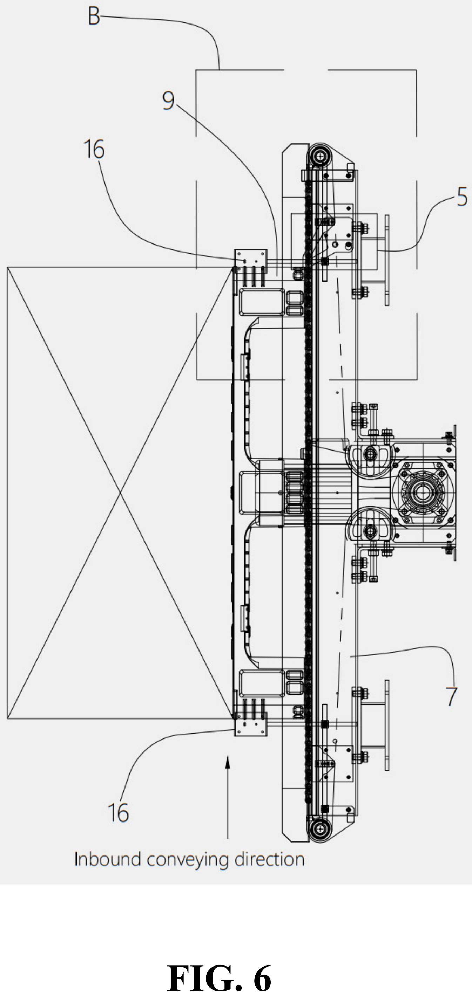

FIG. 6 is a schematic diagram of a conveyor line limit stopping device and a shuttle inbound process;

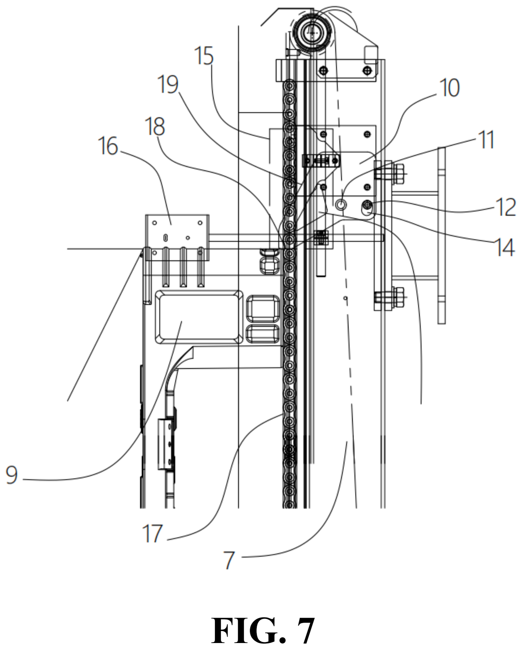

FIG. 7 is a partially enlarged diagram of part B;

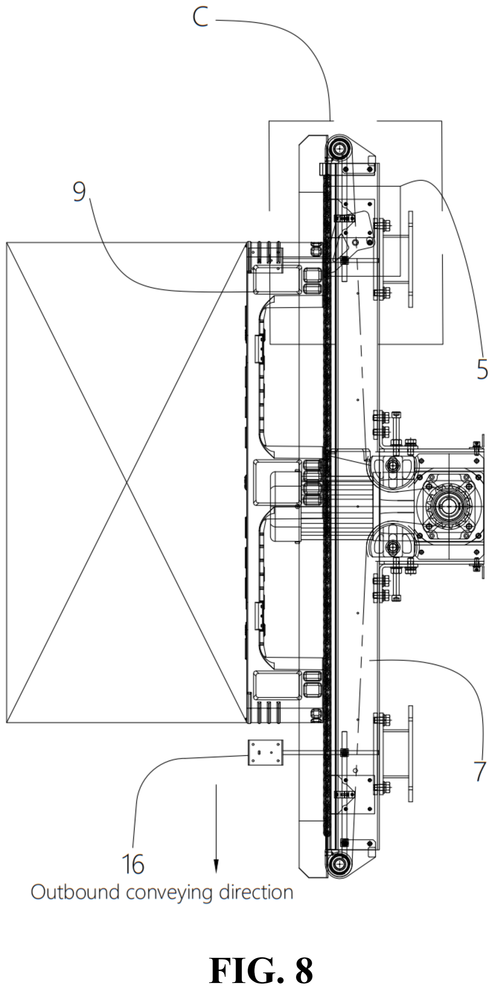

FIG. 8 is a schematic diagram of a conveyor line limit stopping device and a shuttle outbound process; and

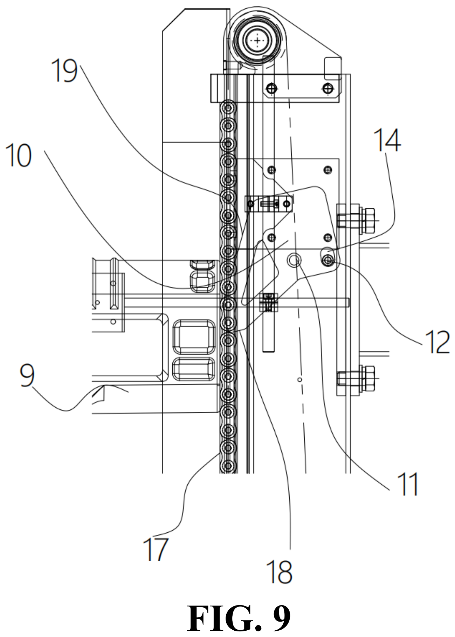

FIG. 9 is a partially enlarged diagram of part C.

### DETAILED DESCRIPTION OF THE EMBODIMENTS

The present disclosure will be further explained below in conjunction with the accompanying drawings.

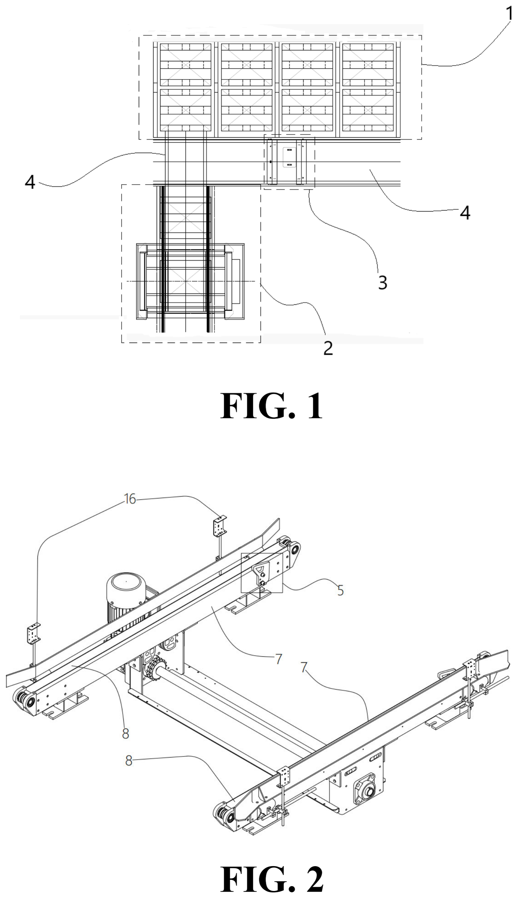

As shown in FIG. 1, a conveyor line limit stopping device and a handling method for a goods pallet inbound and outbound. The device includes interlaced travel tracks 4. A high-bay racking 1 and a conveying mechanism 2 are erected above the travel tracks 4. The high-bay racking 1 and the conveying mechanism 2 can perform goods exchange through a shuttle 3 that moves and travels on the travel tracks 4. The shuttle 3 shuttles below the high-bay racking 1 and the conveying mechanism 2. A limit stopping device 5 is arranged at one end of the conveying mechanism 2 close to the high-bay racking 1. When a pallet 9 is placed on a conveying surface 17, if the conveying mechanism 2 performs forward conveying for inbound, namely, if the pallet 9 is driven by the conveying mechanism 2 to move from one end of the conveying mechanism 2 away from the high-bay racking 1 to one end of the conveying mechanism 2 close to the high-bay racking 1, the limit stopping device 5 is in limit contact with a pallet 9 that carries goods, and if a conveyor belt 8 performs backward conveying for outbound, the pallet 9 presses the limit stopping device 5 down to be below the conveying surface 17.

The conveying mechanism 2 includes two groups of conveyor frames 7 erected on two sides of the travel tracks 4 in parallel. A distance between the two conveyor frames 7 is greater than a width of each travel track 4 and a width of the shuttle, thus ensuring that the shuttle 3 can smoothly shuttle between the two conveyor frames 7. One end of each of the two groups of conveyor frames 7 is close to the high-bay racking 1, and another end is docked with a lift. In a length direction, the two groups of conveyor frames 7 are provided with conveyor belts 8 capable of performing forward and backward conveying. are arranged below centers of the conveyor frames 7. The driving mechanisms can drive the conveyor belts 8 to perform forward or backward conveying, so that the conveyor belts 8 perform forward or backward conveying in the length direction of the conveyor frames 7. Signal emitting devices and signal receiving devices of photoelectric detection devices 16 are respectively arranged on sides of the two groups of conveyor frames 7 away from each other. The limit stopping device 5 is arranged on an inner side of any group of conveyor frame 7. An upper surface of the limit stopping device 5 protrudes from the conveying surfaces of the conveyor belts 8, and the limit stopping device 5 is located between the two conveyor belts 8. The pallet that carries goods is placed on conveying surfaces 17. Two sides of a lower end of the pallet 9 is erected on the conveying surfaces 17 of the two conveyor belts 8. A travel track 4 is located below the two conveyor belts 8 and is higher than the driving mechanisms, thus ensuring that the shuttle 3 can smoothly shuttle below the two conveyor belts. A travel surface of the travel track 4 located below the two conveyor belts 8 directly faces a center region of a lower surface of the pallet 9. A limit plate can be arranged on the travel track 4 located below the two conveyor belts 8, so that when the shuttle 3 is in contact with the limit plate 10 on the travel track 4 located below the two conveyor belts 8, a lifting plate of the shuttle 3 directly faces the lower surface of the pallet 9.

The photoelectric detection devices 16 are mounted at two ends of the conveyor frames 7 in the length direction. The two photoelectric detection devices 16 are electrically connected to the conveyor belts 8. The two photoelectric detection devices 16 jointly control conveying and stopping of the conveyor belts 8. Each of the two photoelectric detection devices 16 includes a laser emitting device and a laser receiving device. The two laser emitting devices are mounted on one conveyor frame 7, and the two laser receiving devices are mounted on another conveyor frame 7. The two laser emitting devices and the two laser receiving devices are mounted on sides, away from each other, of the two conveyor frames 7. After the pallet 9 that carries goods is placed on the conveying surfaces 17, if the conveyor belts 8 perform forward conveying for inbound, when the limit stopping device 5 is in limit contact with a support leg on one side, close to the high-bay racking 1, of the pallet 9 that carries goods: two sides, in the length direction of the conveyor frames 7, of the pallet 9 block laser emitted by the laser emitting devices of the two photoelectric detection devices 16 arranged at the two ends of the conveyor frames 7, so that the receiving devices of the two photoelectric detection devices 16 cannot receive the laser emitted by the laser emitting devices. At this time, the photoelectric detection devices control the driving mechanisms arranged below the conveyor frames 7 to stop, making the conveyor belts 8 not perform conveying. If the conveyor belts 8 perform backward conveying for outbound, a support leg on one side, away from the high-bay racking 1, of the pallet 9 that carries goods can press the limit stopping device 5 to be below the conveying surfaces 17. When two sides, in the length direction of the conveyor frames 7, of the pallet 9 block the laser emitted by the laser emitting devices of the two photoelectric detection devices 16 arranged at the two ends of the conveyor frames 7, so that the receiving devices of the two photoelectric detection devices 16 cannot receive the laser emitted by the laser emitting devices. At this time, the photoelectric detection devices control the driving mechanisms arranged below the conveyor frames 7 to stop, making the conveyor belts 8 not perform conveying. At this time, a bottom of the pallet 9 that carries goods is located right above the lifting plate of the lift.

The limit stopping device 5 includes a limit plate 10 and a rotating pin 11. A rotating hole is formed in a middle portion of the limit plate 10. The rotating pin 11 is fixed on a side surface of the conveyor frame 7 through the rotating hole. A radius of a pin head of the rotating pin 11 is greater than a radius of the rotating hole. That is, when the rotating pin 11 is fixed on the side surface of the conveyor frame 7 through the rotating hole, the limit plate 10 is clamped on sides, close to each other, of the pin head of the rotating pin 11 and the conveyor frame 7. The rotating pin 11 makes one side surface of the limit plate 10 in contact with one side surface of the conveyor frame 7, and the limit plate 10 can rotate around the rotating pin 11 relative to the conveyor frame 7.

A swing adjustment slot 14 is formed in a lower portion of the limit plate 10. The adjustment slot 14 is an arc-shaped slot coaxial with the rotating hole. A swing limit pin 12 is arranged in the swing adjustment slot 14. The swing limit pin 12 is fixed on the side surface of the conveyor frame 7 through the swing adjustment slot 14. When the limit plate 10 rotates around the rotating pin 11 relative to the conveyor frame 7, the swing limit pin 12 slides within the swing adjustment slot 14 and limits a rotation angle of the limit plate 10.

One side, away from the high-bay racking 1, of an upper portion of the limit plate 10 obliquely upwards extends to form the limit portion 15. One side of the limit portion 15 away from the high-bay racking 1 is a vertical limit surface 18. One side of the limit portion 15 close to the high-bay racking 1 is a transitional slope 19. In an initial state, the vertical limit surface 18 of the limit portion 15 is higher than the conveying surface 17 of the conveyor belt 8, and one side of the transitional slope 19 close to the high-bay racking 1 is lower than one side of the transitional slope 19 away from the high-bay racking 1. When the conveyor belt 8 performs forward conveying for inbound, and a support leg on one side of the pallet 9 close to the high-bay racking 1 is in contact the vertical limit surface 18, under the action of a frictional force between the conveyor belt 8 and the pallet 9, the pallet 9 has an impact force on the limit plate 10. Under the action of the impact force, the limit plate 10 rotates around the rotating pin 11 in a direction in which the limit portion 15 moves towards the high-bay racking 1, until the swing limit pin 12 is in pressing contact with one end of the swing adjustment slot 14 close to the high-bay racking 1. At this time, the limit plate 10 cannot continue to rotate around the rotating pin 11 relative to the conveyor frame 7. A distance between the vertical limit surface 18 and the conveying surface 17 of the conveyor belt 8 is slightly greater than a distance between the vertical limit surface 18 and the conveying surface 17 of the conveyor belt 8 in the initial state. At this time, the vertical limit surface 18 is in limit contact with the pallet 9, so that the pallet 9 cannot continue to move along with the conveyor belt 8. In the process that the conveyor belt 8 performs backward conveying for outbound, a contour of a lower end of a support leg on one side of the pallet 9 away from the high-bay racking 1 presses the limit portion 15 of the limit stopping device 5 along the transitional slope 19. In this process, the limit plate 10 rotates around the rotating pin 11 in a direction in which the limit portion 15 moves away from the high-bay racking 1, until the limit plate 10 descends below the conveying surface 17 under the action of the support leg of the pallet 9. In this process, a contour of an upper end of the limit portion 15 is always in contact with the contour of the lower end of the pallet 9.

A hollow hole 13 is formed in the limit portion 15. The hollow 13 is disposed on one side of the limit portion 15 away from the high-bay racking 1 relative to the rotating pin 11. In this way, a weight of one side of the limit plate 10 away from the high-bay racking 1 is less than a weight of one side of the limit plate 10 close to the high-bay racking 1. Thus, in an initial state of the limit plate 10, namely in a state that the limit plate 10 only bears its own gravity, the side of the limit plate 10 away from the high-bay racking 1 upwards protrudes from the conveying surface 17 of the conveyor belt 8, and the side of the limit plate 10 close to the high-bay racking 1 is downward and lower than the conveying surface 17 of the conveyor belt 8.

Handling steps of a goods pallet inbound process of the conveyor line limit stopping device include:
step S1: a lift lifts and transports the pallet 9 that carries goods onto the conveying surfaces 17, away from the high-bay racking 1, of the conveyor belts 8 of the conveying mechanism 2;
step S2: the conveying mechanism 2 is turned on, and the conveyor belts 8 perform forward conveying, to cause the pallet 9 to move, under the driving of the conveyor belts 8, from the ends of the conveyor belts 8 close to the high-bay racking 1 to the ends of the conveyor belts 8 away from high-bay racking 1;
step S3: when one side surface of the support leg of the pallet 9 is in contact with the vertical limit surface 18, under the action of a frictional force between the conveyor belts 8 and the pallet 9, the pallet 9 has an impact force on the limit plate 10; under the action of the impact force, the limit plate 10 rotates around the rotating pin 11 in a direction in which the limit portion 15 moves towards the high-bay racking 1, until the swing limit pin 12 is in pressing contact with an end of the swing adjustment slot 14 close to the high-bay racking 1; at this time, the limit plate 10 cannot continue to rotate around the rotating pin 11 relative to the conveyor frames 7; a distance between the vertical limit surface 18 and the conveying surfaces 17 of the conveyor belts 8 is slightly greater than a distance between the vertical limit surface 18 and the conveying surfaces 17 of the conveyor belts 8 in the initial state; at this time, the vertical limit surface 18 is in limit contact with the pallet 9, so that the pallet 9 cannot continue to move along with the conveyor belts 8;
step S4: at this time, two sides, in the length direction of the conveyor frames 7, of the pallet 9 block the laser emitted by the laser emitting devices of the two photoelectric detection devices 16 arranged at the two ends of the conveyor frames 7, so that the receiving devices of the two photoelectric detection devices 16 cannot receive the laser emitted by the laser emitting devices. At this time, the photoelectric detection devices control the driving mechanisms arranged below the conveyor frames 7 to stop, making the conveyor belts 8 not perform conveying;
step S5: afterwards, the shuttle 3 is driven onto a travel track 4 located below the two conveyor belts 8 and is in limit contact with the limit plate 10, and at this time, a lifting plate of the shuttle 3 directly faces a lower surface of the pallet 9 that carries goods; and
step S6: afterwards, the lifting plate of the shuttle 3 rises up and jacks up the pallet 9 that carries goods and then transports the pallet 9 into the high-bay racking 1, to complete the inbound process.

Handling steps of a goods pallet outbound process of the conveyor line limit stopping device include:
step S7: the shuttle 3 transports the pallet 9 that carries goods onto the conveying surfaces 17 at ends, close to the high-bay racking 1, of the conveyor belts 8 of the conveying mechanism 2;
step S8: the conveying mechanism 2 is turned on, and the conveyor belts 8 perform backward conveying, to cause the pallet 9 to move, under the driving of the conveying mechanism 2, from one end of the conveying mechanism 2 close to the high-bay racking 1 to one of the conveying mechanism 2 away from the high-bay racking 1;
step S9: when a support leg at a lower end of the pallet 9 that carries goods is in contact the transitional slopes 19 on the limit plate 10, the support leg at the lower end of the pallet 9 that carries goods presses the limit portion 15 of the limit stopping device 5 along the transitional slope 19; in this process, the limit plate 10 rotates around the rotating pin 11in the direction in which the limit portion 15 moves towards the centers of the conveyor frames 7, until the limit plate 10 descends below the conveying surfaces 17 under the action of the support leg of the pallet 9 that carries goods; in this process, a contour of an upper end of the limit portion 15 is always in contact with the contour of the lower end of the pallet 9 that carries goods, and the limit plate 10 does not hinder the pallet (9) that carries goods from moving together with the two conveyor belts (8);
step S10: at this time, two sides, in the length direction of the conveyor frames 7, of the goods carried on the pallet 9 block laser emitted by the laser emitting devices of the two photoelectric detection devices 16 arranged at the two ends of the conveyor frames 7, so that the receiving devices of the two photoelectric detection devices 16 cannot receive the laser emitted by the laser emitting devices; at this time, the photoelectric detection devices control the driving mechanisms arranged below the conveyor frames 7 to stop, making the conveyor belts 8 not perform conveying; at this time, a bottom of the pallet 9 that carries goods is located right above the lifting plate of the lift; and
step S11: afterwards, the lifting plate of the lift rises up and jacks up the pallet 9 that carries goods, and lifts the pallet 9 that carries goods to an outbound port, to complete the outbound process.

The above is a first embodiment of the conveyor line limit stopping device and the handling method for goods pallet inbound and outbound. In a specific scenario, the present disclosure also has a second embodiment and a third embodiment:

In the second embodiment of this solution, namely, when the goods carried on the pallet 9 placed on the conveying mechanism 2 are fragile products, the pallet 9 needs to be prevented from being in collision contact with the limit stopping device 5. Therefore, a vertical electromagnetic controller is hung on the support leg on one side of the pallet 9 close to the limit stopping device 5. An electromagnet capable of being remotely controlled is mounted on the electromagnetic controller. A magnet is mounted on a side, close to upper ends of the conveyor belts 8, of a lower portion of the limit plate 10. When the electromagnetic controller is hung on the support leg on the side of the pallet 9 close to the limit stopping device 5, the electromagnet on the electromagnetic controller is located below the conveying surfaces 17 of the conveyor belts 8, and directly faces the magnet at the lower portion of the limit plate 10; and a repulsive force exists between the electromagnet on the electromagnetic controller and the magnet at the lower portion of the limit plate 10. When the pallet 9 that carries fragile products is erected on the conveying surfaces 17 of the two groups of conveyor belts 8, the electromagnet on the electromagnetic controller is remotely turned on, and then the pallet 9 that carries fragile products moves towards the limit stopping device 5 under the conveying of the two groups of conveyor belts 8. In this process, the electromagnet on the electromagnetic controller and the magnet on the limit plate 10 repel each other such that the limit plate 10 rotates around the rotating pin 11 in a direction in which the limit portion 15 approaches the centers of the conveyor frames 7, until the limit plate 10 descends below the conveying surfaces 17 under the action of the support leg of the pallet 9 that carries goods. In this way, the pallet 9 that carries fragile products will not collide with the limit stopping device 5 in the conveying process of the conveyor line. Afterwards, step S4, step S5, and step SS6 are performed, to complete the inbound process.

In the third embodiment of this solution, when goods in the high-bay racking 1 need to be inspected before outbound, the limit stopping device 5 needs to limit a pallet 9 that carries outbound goods, so that an inspection device arranged at one end of the conveying mechanism 2 close to the high-bay racking 1 can scan and inspect the outbound goods. A limit pin hole 20 is formed in the limit plate 10 of the limit stopping device 5. The limit pin hole 20 is located between the rotating pin 11 and the swinging limit pin 12, and is biased towards the centers of the conveyor frames 7. Relative to the limit stop device 5, an electric telescopic actuator is arranged inside the group of conveyor frame 7 provided with the limit stop device 5. A limit pin is arranged at a telescopic portion of the electric telescopic actuator. In the initial state, that is, when the limit plate 10 is only under its own gravity, a side of the limit plate 10 close to the centers of the conveyor frames 7 protrudes upwards from the conveying surfaces 17 of the conveyor belts 8, and a side of the limit plate 10 away from the centers of the conveyor frames 7 is downward and is lower than the conveying surfaces 17 of the conveyor belts 8. At this time, the telescopic portion of the electric telescopic actuator arranged relative to the limit stopping device 5 inside the conveyor frame extends towards the limit stopping device 5, and the limit pin arranged on the telescopic portion of the electric telescopic actuator can exactly pass through the limit pin hole 20, so that the limit plate 10 cannot rotate around the rotating pin 11. When the lifting plate of the shuttle 3 upwards lifts the pallet 9 that carries outbound goods and places the pallet 9 that carries outbound goods on the conveying surfaces 17 of the backward-conveying conveyor belts 8 on one side of the conveying mechanism 2 close to the high-bay racking 1, the telescopic portion of the electric telescopic actuator is remotely controlled to extend towards the limit stopping device 5, so that the limit pin arranged on the telescopic portion of the electric telescopic actuator passes through the limit pin hole 20. At this time, the pallet 9 that carries outbound goods is driven by the backward-conveying conveyor belts 8 to be connected to the transitional slopes 19 on a side, close to the high-bay racking 1, of the limit portion 15 on the limit plate 10. However, since the limit pin arranged on the telescopic portion of the electric telescopic actuator is inserted into the limit pin hole 20 at this time, the limit plate 10 cannot rotates around the rotating pin 11. Thus, the lower end of the support leg on one side, close to the limit stopping device 5, of the pallet 9 that carries outbound goods cannot press down the limit plate 10. Thus, the limit stopping device 5 limits the pallet 9 that carries outbound goods and scans, and the inspection device arranged at the end of the conveying mechanism 2 close to the high-bay racking 1 scans and inspects the outbound goods. If scanning and inspection results are qualified, the telescopic portion of the electric telescopic actuator can be remotely controlled to retract away from the limit stopping device 5, so that the limit pin arranged on the telescopic portion of the electric telescopic actuator is detached from the limit pin hole 20, and the limit plate 10 can rotate around the rotating pin 11 in the direction in which the limit portion 15 approaches the centers of the conveyor frames 7 under the action of the support leg of the pallet 9 that carries the outbound goods, until the limit plate 10 descends below the conveying surfaces 17. At this time, the pallet 9 that carries the outbound goods can be smoothly conveyed on the conveying mechanism 2. Afterwards, step S10 and step S11 are performed to complete the outbound process.

The foregoing descriptions are preferable implementations of the present disclosure. It is noted that a person of ordinary skill in the art may make some improvements and modifications without departing from the principle of the present invention and the improvements and modifications shall also fall within the protection scope of the present disclosure.

## Claims

1. A conveyor line limit stopping device, comprising a high-bay racking (1), a conveying mechanism (2), a shuttle (3), and interlaced travel tracks (4), wherein the high-bay racking (1) and the conveying mechanism (2) are located above the travel tracks (4) and are in no contact with each other; the shuttle (3) moves and travels on the travel tracks (4) and shuttles below the high-bay racking (1) and the conveying mechanism (2); a limit stopping device (5) is arranged at one end of the conveying mechanism (2) close to the high-bay racking (1); and when a pallet (9) that carries goods is placed on a conveying surface (17), if the conveying mechanism (2) performs forward conveying for inbound, the limit stopping device (5) is in limit contact with the pallet (9) that carries goods, and if a conveyor belt (8) performs backward conveying for outbound, the pallet (9) presses the limit stopping device (5) down to be below the conveying surface (17).

2. The conveyor line limit stopping device according to claim 1, wherein the conveying mechanism (2) comprises two groups of conveyor frames (7) that are erected on two sides of the travel tracks (4) in parallel; the two groups of conveyor frames (7) are provided in the length direction with conveyor belts (8) capable of performing forward and backward conveying; the limit stopping device (5) is arranged on an inner side of any group of conveyor frames (7); and an upper surface of the limit stopping device (5) protrudes from the conveying surfaces of the conveyor belts (8).

3. The conveyor line limit stopping device according to claim 2, wherein the limit stopping device (5) comprises a limit plate (10) and a rotating pin (11); a rotating hole is formed in a middle portion of the limit plate (10); the rotating pin (11) is fixed on a side surface of a conveyor frame (7) through the rotating hole; the limit plate (10) is able to rotate around the rotating pin (11) relative to the conveyor frame (7).

4. The conveyor line limit stopping device according to claim 3, wherein a swing adjustment slot (14) is formed in a lower portion of the limit plate (10); a swing limit pin (12) is arranged in the swing adjustment slot (14); the swing limit pin (12) is fixed on the side surface of the conveyor frame (7) through the swing adjustment slot (14); when the limit plate (10) rotates around the rotating pin (11) relative to the conveyor frame (7), the swing limit pin (12) slides within the swing adjustment slot (14) and limits a rotation angle of the limit plate (10);

5. The conveyor line limit stopping device according to claim 4, wherein one side, close to the center of the conveyor frame (7), of an upper portion of the limit plate (10) obliquely upwards extends to form the limit portion (15); one side of the limit portion (15) close to the center of the conveyor frame (7) is a vertical limit surface (18); one side of the limit portion (15) away from the center of the conveyor frame (7) is a transitional slope (19); and in an initial state, the vertical limit surface (18) of the limit portion (15) is higher than the conveying surface (17) of the conveyor belt (8).

6. The conveyor line limit stopping device according to claim 5, wherein a hollow hole (13) is formed in the limit portion (15); and the hollow hole (13) is disposed on one side of the limit portion (15) away from the high-bay racking (1) relative to the rotating pin (11).

7. A handling method for a goods pallet inbound process for the conveyor line limit stopping device according to claim 5, wherein
step S1: a lift lifts and transports the pallet (9) that carries goods onto the conveying surfaces (17), away from the high-bay racking (1), of the conveyor belts (8) of the conveying mechanism (2);
step S2: the conveying mechanism (2) is turned on, and the conveyor belts (8) perform forward conveying, to cause the pallet that carries goods on the conveying surfaces (17) of the conveyor belts (8) to move towards the high-bay racking (1);
step S3: under the driving of the conveyor belts (8) on the pallet (9) that carries goods, when one side surface of a support leg on one side, close to the high-bay racking (1), of the pallet (9) that carries goods is in contact the vertical limit surface (18), the limit plate (10) rotates around the rotating pin (11) in a direction in which the limit portion (15) moves away from the centers of the conveyor frames (7), until the swing limit pin (12) is in pressing contact with an end of the swing adjustment slot (14) away from the centers of the conveyor frames (7); at the time, the vertical limit surface (18) is in limit contact with the pallet (9);
step S4: in the state of step S3, the two photoelectric detection devices (16) arranged at the two ends of the conveyor frames (7) control the driving mechanisms arranged below the conveyor frames (7) to stop, making the conveyor belts (8) not perform conveying;
step S5: in the state of step S4, the shuttle (3) is driven onto a travel track (4) located below the two conveyor belts (8) and is in limit contact with the limit plates, and at the time, a lifting plate of the shuttle (3) directly faces a lower surface of the pallet (9) that carries goods; and
step S6: in the state of S5, the lifting plate of the shuttle (3) rises up and jacks up the pallet (9) that carries goods, then transports the pallet (9) that carries goods along the travel track (4), and places the pallet (9) that carries goods into the high-bay racking (1), to complete the inbound process.

8. The handling method for a goods pallet outbound process for the conveyor line limit stopping device according to claim 5, wherein
step S7: the shuttle (3) transports the pallet (9) that carries goods onto the conveying surfaces (17) at ends, close to the high-bay racking (1), of the conveyor belts (8) of the conveying mechanism (2);
step S8: the conveying mechanism (2) is turned on, and the conveyor belts (8) perform backward conveying, to cause the pallet that carries goods on the conveying surfaces (17) of the conveyor belts (8) to move away from the high-bay racking (1);
step S9: under the driving of the conveyor belts (8) on the pallet (9) that carries goods, when a contour of a lower end of the support leg on one side, away from the high-bay racking (1), of the pallet (9) that carries goods is in contact the transitional slope (19) on the limit plate (10), the contour of the lower end of the support leg at the lower end of the pallet (9) that carries goods presses the limit portion (15) of the limit stopping device (5) along the transitional slope (19); in the process, the limit plate (10) rotates around the rotating pin (11) in the direction in which the limit portion (15) moves towards the centers of the conveyor frames (7), until the limit plate (10) descends below the conveying surfaces (17) under the action of the support leg of the pallet (9) that carries goods; in the process, a contour of an upper end of the limit portion (15) is always in contact with the contour of the lower end of the pallet (9) that carries goods, and the limit plate (10) does not hinder the pallet (9) that carries goods from moving together with the two conveyor belts (8);
step S10: at the time, two sides, in the length direction of the conveyor frame (7), of the goods carried on the pallet (9) block laser emitted by laser emitting devices of two photoelectric detection devices (16) arranged at two ends of the conveyor frame (7), so that receiving devices of the two photoelectric detection devices (16) do not receive the laser emitted by the laser emitting devices; at the time, photoelectric detection devices control driving mechanisms arranged below the conveyor frames (7) to stop, making the conveyor belts (8) not perform conveying; at the time, a bottom of the pallet (9) that carries goods is located right above the lifting plate of the lift; and
step S11: afterwards, the lifting plate of the lift rises up and jacks up the pallet (9) that carries goods, and lifts the pallet (9) that carries goods to an outbound port, to complete the outbound process.
